(19) Europäisches Patentamt
European Patent Office
Office européen des brevets

(11) Publication number : **0 264 431 B1**

# (12) EUROPEAN PATENT SPECIFICATION

(45) Date of publication of patent specification : **18.03.92 Bulletin 92/12**

(51) Int. Cl.$^5$ : **H04B 7/19,** G01S 5/02

(21) Application number : **87903097.1**

(22) Date of filing : **15.04.87**

(86) International application number : **PCT/US87/00825**

(87) International publication number : **WO 87/06410 22.10.87 Gazette 87/23**

## (54) METHOD AND APPARATUS FOR PRECISION SURVEYING USING BROADCAST SATELLITE SIGNALS.

(30) Priority : **15.04.86 US 852988**

(43) Date of publication of application : **27.04.88 Bulletin 88/17**

(45) Publication of the grant of the patent : **18.03.92 Bulletin 92/12**

(84) Designated Contracting States : **BE CH DE FR GB IT LI NL SE**

(56) References cited :
**US-A- 3 906 204**
**US-A- 4 150 335**
**US-A- 4 315 262**

(56) References cited :
**IEEE EASCON 1985, 18TH ANNUAL ELECTRONICS AND AEROSPACE SYSTEMS CONFERENCE, 28th-30th October 1985, Washinton, D.C., pages 9-18, IEEE, New York, US; P.Y.C. HWANG et al.: "GPS Geodesy: experimental results using the Kalman filter approach"**

(73) Proprietor : **Magnavox Government and Industrial Electronics Company**
**1313 Production Road**
**Fort Wayne Indiana 46808 (US)**

(72) Inventor : **HATCH, Ronald, R.**
**2829 Maricopa Street**
**Torrance, CA 90503 (US)**

(74) Representative : **Strijland, Wilfred et al**
**INTERNATIONAAL OCTROOIBUREAU B.V.**
**Prof. Holstlaan 6**
**NL-5656 AA Eindhoven (NL)**

EP 0 264 431 B1

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates generally to surveying using signals broadcast from a plurality of orbiting satellites, and, more particularly, to satellite-based surveying systems that determine the position coordinates of an unknown site relative to a reference site whose position coordinates are known.

Satellite-based positioning systems such as the Global Positioning System (GPS) are now a highly popular means of accurately and precisely determining the position of a receiver. These systems have numerous practical applications and, depending on the time duration over which measurements are taken, they can determine a receiver's position to sub-centimeter accuracy.

In GPS, a number of satellites orbiting the earth in well defined polar orbits continuously broadcast signals indicating their precise orbital positions. The broadcast signals all have a common frequency, but are modulated by unique, pseudorandom digital codes. Each satellite signal is based on a precision internal clock. The receivers detect the superimposed modulated carrier signals and determine either or both of the code phase and carrier phase of each detected signal, relative to their own internal clocks. These detected phases can be used to determine the receivers position coordinates.

One typical system for processing these carrier phase measurements is described in an article by Bossler et al, entitled "Using the Global Positioning System (GPS) for Geodetec Positioning", Bulletin Geodesique, Vol. 54, No. 2, 1980, pages 553-563. This article describes a processing technique known as double differencing. In this technique, the carrier phase measurements are collected at each of two receivers for a plurality of GPS satellites. One receiver is located at a site whose position coordinates are to be determined, and the other is located at a reference site whose position coordinates are known. In an initial step, the carrier phase measurements for each satellite are differenced across the two sites. This eliminates by cancellation any clock error in the satellite, since the effects of such an error would be identical at each site. Thereafter, one satellite is chosen as a reference satellite, and the single difference measurement obtained for it is subtracted from the single difference measurements obtained for all of the other satellites. This second differencing eliminates by cancellation any clock errors in the receivers at the two sites, since the effects of such clock errors would be identical in all of the single differences measurement.

Several additional steps involving the double difference measurements are required. First, rough estimates for the unknown site's coordinates are provided to the apparatus. These estimated coordinates are compared with the specific satellite orbits obtained from the data broadcast by the satellite or from any other suitable source (e.g., the National Geodetic Survey). The expected value of the double difference measurements can thereby be determined. Equations defining the error in the expected double difference values are then formed by differencing them from the corresponding actual double difference measurement. The sensitivity of these error equations to changes in the estimated coordinates is also determined, whereby the error equations can be solved. The equations are solved usually in an iterative, least mean square error procedure, to determine the particular site coordinates that will minimize the total mean square error in the computed double difference values.

The carrier phase measurements do not reflect the initial number of integral carrier cycles present in each satellite/receiver link. The double difference measurements, therefore, are biased by an unknown integral number of cycles. The iterative, least squares procedure described above must, therefore, also solve for this bias in each double difference measurement.

When the iterative procedure described above has been iterated to the point where the position coordinates and double difference bias values have converged to fixed values, the procedure advances to an additional stage in which the computed double differences values are adjusted by the nearest whole value to the bias solution and then that bias state is dropped from the least square computation. Typically, the uncertainty in the bias determination is also computed and it is dropped from the least squares computation only when the uncertainty is acceptably small. Otherwise, the iteration is continued.

The most accurate determination of the unknown site's position coordinates is obtained when an account is made for the correlation between the double difference measurements that arises from differencing with respect to the same satellite/receiver link. Accounting for this correlation significantly increases both the complexity and time required to complete the computation. In addition, these double differencing techniques are not ordinarily effective when the signal for the reference site and/or reference satellite is lost.

In IEEE EASCON 1985, 18th Annual Electronics and Aerospace Systems conference, 28th-30th October 1985, pages 9-18 IEEE, New York, there is described the experimental results in a method of processing GPS phase measurements for precise geoaesy using Kalman filters. The Kalman filter is a linear estimation scheme in which there must be a linear relationship between the measurement and the quantity being measured. A differencing technique is then used to eliminate clock errors.

There is a need for a technique and related apparatus for more effectively utilizing the carrier phase measurements obtained in a surveying system utilizing signals broadcast from a plurality of orbiting satellites and detected by receivers located at two or more sites, one having known position coordinates and the other having coordinates to be determined.

According to the present invention there is provided a method for determining the position coordinates of a first receiver using signals broadcast from a plurality of orbiting satellites, wherein a second receiver is located at a reference location having known position coordinates, and wherein the first and second receivers each receive the plurality of broadcast signals and detect the carrier phase. of each signal relative to an internal clock, the method comprising steps of:

measuring the phase of the carrier signal received by each of the first and second receivers from each satellite, to produce a plurality of carrier phase measurements;

calculating the expected phase of the carrier signal received by each of the first and second receivers from each satellite, based on the satellite's orbit and an estimate of the receiver's position, to produce a plurality of carrier phase estimates;

and characterised by repeating the steps of measuring and calculating at regular time intervals, to produce a plurality of carrier phase measurements and a plurality of carrier phase estimates at each of a succession of time points;

determining the difference between the changes in carrier phase measurements and the changes in carrier phase estimates over successive time points for each satellite/receiver pair, to produce a plurality of error values for each time point;

defining each of the plurality of error values for each time point to be equal to a predetermined function of the signal's sensitivity to small changes in the position coordinates of the corresponding receiver and in the clocks of the corresponding receiver and satellite;

forming and updating at each time point a predetermined matrix based on the plurality of error equations for each time point;

the step of forming and updating including a step of eliminating dependence on previous values of the receiver and satellite clocks; and

solving the matrix to determine the particular position coordinates for the first receiver that minimize the mean square value of the plurality of error values. There is also provided an apparatus according to claim 10. In one embodiment of the invention, the matrix is formed using a triangular Householder algorithm. The matrix entries indicating sensitivity to the receiver and satellite clocks are located in a predetermined section of the matrix, such that when the matrix entries are updated, dependence on previously values of the phase noise parameters of the satellite and receiver clocks is eliminated simply by zeroing out the predetermined section. The matrix thereby remains the same size regardless of the number of times it is updated. This substantially simplifies the solving of the matrix to determine the first site's position coordinates.

The apparatus and procedure described above can represent merely the first stage in the determination of the first site's position coordinates. In an optional second stage, which is similar in many respects to the first stage, the process is modified to take into account the -0.5 correlation between the error values for successive time points. This correlation arises because one of the terms in the respective equations defining the error value for successive time points is, by definition, the same. Thus, the second stage of the process appropriately whitens the successive error equations, making them substantially uncorrelated with each other, prior to incorporation into the matrix. Subsequently solving the matrix yields position coordinates that are even more accurate than the first stage solution. This second stage solution can be termed a Doppler pseudorange solution.

In an alternative embodiment of the invention, the second stage of processing can be used alone, without need for the first stage. Unless a fairly accurate estimation of the first site's position coordinates is initially made, however, this second stage will likely need to be iterated.

In an optional, final stage of the procedure, any ambiguity in the number of whole carrier cycles in the measured carrier phase signals is resolved. This third stage utilizes substantially the same algorithm as the second stage, described above. The only difference is the first measured phase signal is scaled by the square root of 2 before being incorporated into the matrix. The subsequent integrated Doppler measurements incorporated into the matrix are made to be uncorrelated with each other, i.e., whitened, as was done in the second stage, except that a cross-correlation coefficient of -.707 is used, rather than -0.5. Solving the matrix after the information has been fully loaded into it provides a solution equivalent to one determined with knowledge of the actual number of whole carrier cycles in each link. Each satellite/receiver link is handled in a sequential fashion, with the correct resolution of each improving the probability of correctly resolving the next. The final solution can be termed a resolved lane solution.

Other aspects and advantages of the present invention will become apparent from the following description of the preferred embodiment, taken in conjunction with the accompanying drawings, which illustrate, by way of example, the principles of the invention.

## Brief Description of the Drawings

Figure 1 is a schematic diagram (not to scale) of a surveying system having two receives, one located at an unknown site and the other at a reference site having known coordinates, the receivers detecting signals broadcast from four orbiting satellites, to determine the coordinates of the unknown site;
Figure 2 is a simplified flowchart showing the operational steps performed by the apparatus of the invention in accurately determining the position coordinates of the unknown site of Figure 1;
Figure 3 is a schematic diagram of a square root information filter matrix used by the apparatus of the invention; and
Figures 4A and 4B are a flowchart depicting in more detail the operational steps performed in each of the first, second and third stages of th flowchart of Figure 2.

## Description of the Preferred Embodiment

As shown in the accompanying drawings, this invention is embodied in an apparatus for accurately determining the position coordinates of a predetermined, unknown site 11 using signals broadcast from a plurality of orbiting satellites 13. The apparatus is particularly useful as part of the Global Positioning System (GPS). A first receiver 15 is located at the unknown site 11, and a second receiver 17 is located at a reference site 19 having known coordinates, which can be spaced many kilometers from the unknown site.

Eight separate links 21 are thereby formed between the four satellites and two receivers.

The four satellites 13 all broadcast carrier signals having the same nominal frequency but each modulated by a unique pseudorandom digital code. The respective first and second receivers 15 and 17 include antennas 23 and 25 for receiving the superimposed, incoming modulated carrier signals and the receivers measure the phase angle of each. The phase angle measurements are transmitted on lines 27 and 29 from the respective receivers 15 and 17 to a data processor 31, for position determination.

The phase measurements are made periodically over an extended time (e.g., 30 minutes), and can be compacted in a conventional fashion. For example, the measurements can be made every 20 milliseconds and compacted into average values that are updated once per minute. Phase noise in the internal clocks of both the satellites and the receivers introduce uncertainties into these successive phase measurements.

In the past, the carrier phase measurements for each of the satellite/receiver links 21 were typically processed using a double differencing technique to detect the unknown site's position coordinates. This technique cancelled out the corrupting effects of phase noise in the internal clocks of the respective satellites and receivers and thereby led to a reasonably accurate position determination. For several reasons, however, this prior double differencing technique has not proven to be entirely satisfactory.

The apparatus of the invention avoids the drawbacks associated with the prior double differencing technique by expressly solving for the magnitude of the phase errors in the internal clocks of the satellites 13 and the receivers 15 and 17, rather than differencing those phase errors out.

This yields substantially improved results, in a highly efficient manner.

More particularly, the data processor 31 processes the successive sets of measured phase signals in a special three-stage process, which is depicted schematically in Figure 2. Three successive stages 33, 35 and 37 of the technique each yield progressively more accurate position determinations. The first stage yields what is called a hyperbolic solution, the second stage a Doppler pseudorange solution, and the third stage a resolved lane solution. These three stages are depicted in greater detail in Figures 4A and 4B. The three stages are substantially similar to each other, differing in only a few small, but significant ways, as will become apparent from the following description.

All three of the successive stages 33, 35 and 37 of the process expressly solve for the phase errors contributed by noise in the internal clocks of the satellites 13 and the receivers 15 and 17. Each stage determines the difference between the phase measurements of each satellite/receiver link 21 at successive time points, which corresponds to the range change between such time points. Each stage further computes the expected range change between the same time points, based on the best current estimate of the receiver site's coordinates and the known satellite orbits. The difference between corresponding ones of these phase difference measurements and phase difference estimates represents error values, whose equivalent equations are incorporated into a special square root information filter (SRIF) matrix. Each equation for each error value is given as follows:

$$\text{Error (E)} = \text{Measured Range} - \text{Computed Range}$$
$$= \text{Bias} + \frac{\partial E}{\partial X}\Delta X + \frac{\partial E}{\partial Y}\Delta Y + \frac{\partial E}{\partial Z}\Delta Z + \frac{\partial E}{\partial \text{Clock}_{sat}}\Delta \text{Clock}_{sat} + \frac{\partial E}{\partial \text{Clock}_{rcvr}}\Delta \text{Clock}_{rcvr}$$

Where

$$\begin{cases} X, Y, Z = \text{Site Coordinates} \\ \text{Clock}_{sort} = \text{Satellite clock phase noise} \\ \text{Clock}_{rcvr} = \text{Receiver clock phase noise} \end{cases}$$

This equation is formed for all eight satellite/receiver links 21. The eight equations include 12 parameters, namely, the X, Y and Z coordinates for both receivers 15 and 17, the phase noise of the four satellite clocks, and the phase noise of the two receiver clocks. Because the reference receiver 17 has known coordinates and is defined to have a fixed reference clock, only eight of these parameters are unknow. They can be determined by solving the eight simultaneous equations. The bias terms in the eight equations are cancelled out by subtracting successive equations.

The SRIF matrix, which is depicted in simplified form in Figure 3, greatly simplifies the mathematical steps required to properly process the information. The lower-left triangular section 39 of the matrix is cleared to zero and remains in that state for the entire procedure. In each of the three stages of the Figure 2 process, the error equations for each of the successive time points are incorporated sequentially into the upper-right, triangular section 41 of the matrix. The particular entries that reflect sensitivity of the error values to phase noise in the internal clocks of the satellites 13 and the receivers 15 and 17 are intentionally located in the top rows of the matrix. The bottom rows reflect the sensitivity of the error values to the site coordinates. By so arranging the matrix entries, the dependence of the entries on previous values of the clock phase noise can be conveniently eliminated simply by zeroing out the pertinent top rows. Because of the nature of the SRIF matrix, this has no effect on the continued accuracy of the lower rows. In the last step in each stage of the procedure, the SRIF matrix is solved, to produce the particular corrections to the previous estimate of the site coordinates that provide the minimum mean square error for the sum of the various error values.

In the first stage 33 of the procedure, the error equations are incorporated directly into the SRIF matrix. The resulting hyperbolic solution gives a very accurate estimation of the known site's coordinates. In the second stage 35, the equations are whitened (i.e., made to be uncorrelated with each other) prior to incorporation into the matrix. This yields a slightly more accurate, Doppler pseudorange solution. Finally, in the third stage 37, the previous uncertainty in the number of whole carrier cycles n each satellite/receiver link 21 is expressly resolved, in a sequential fashion. The resulting final solution to the SRIF matrix is thereby an extremely accurate estimation of the unknown site's coordinates.

Figures 4A and 4B together are a simplified flowchart showing the operational steps performed by the date processor 31 in processing the successive carrier phase measurements derived for the various satellite/receiver links 21. The three stages 33, 35 and 37 of the overall process are depicted together in one figure so that the extensive similarities of the three stages can be readily determined. These similarities lead to significant savings in software development and in the sizing of the required processor.

Addressing first the steps performed in implementing the first stage 33 of the technique, it will be observed that a first step 43 of the procedure clears all of the locations in the SRIF matrix. Thereafter, at step 45, the matrix locations corresponding to the coordinates of the reference site 11 (Figure 1) are constrained to their known values by entering appropriate large values, e.g., one million. These matrix locations are located along the main diagonal of the SRIF matrix, as indicated by the reference numeral 47 in Figure 3. The remaining matrix locations in the same rows retain their zero values.

In a following step 49 of the first stage 33, the program indexes to accept carrier phase measurements corresponding to the first of the plurality of time points. Subsequently in the program, when a loopback is made to this step 49, the program indexes to the next succeeding time point.

Next, in a step 51, the processor 31 clears the top rows o the SRIF matrix that carry information relating to the phase noise contributed by the various satellite and receiver clocks. In the initial loop through the program,

these rows are already set to zero (by step 43). Also in step 51, the matrix location corresponding to phase noise contributed by the reference site clock is constrained by entering a large value (e.g., one million) into it. This location is the diagonal element identified by the reference numeral 53 in Figure 3.

The program next proceeds to a step 55, where it indexes to accept the particular carrier phase measurements corresponding to the first site 11. Later in the program, when looping back to this step, it indexes to the next succeeding site. In the preferred embodiment, just two sites are described, but it will be appreciated that the technique of the invention also has utility in processing the carrier phase measurements for a greater number of sites.

Next, at a step 57, the program indexes to accept carrier phase measurements corresponding to the first of the satellites 13. Later in the program, when looping back to this same step 57, the program indexes to the next succeeding satellite. In the preferred embodiment, four satellites are depicted, but it will be appreciated that any plurality will suffice.

At a succeeding step 59, the program computes the range from the currently-indexed satellite 13 to the currently-indexed receiver site 11 or 19, along with derivatives of the range equation with respect to the site's currently-estimated position coordinates. Initially, these estimated coordinates need not be accurate at all. In fact, they can even be initially set at the center of the earth. When the estimate is inaccurate to that degree, however, iteration of the first stage 33 of the technique will likely be required. Preferably, the initial estimate of the receiver's position is provided using the codes present on the incoming satellite signals. When this is done, iteration of the first stage is not required.

The derivatives computed in the steps 59 are used as the coefficients in a conventional Taylor series expansion of the range equation. First order terms are all that are ordinarily required, so that the range equation is a mere linear function of the estimated site coordinates.

In a following step 61, it is determined whether or not the carrier phase measurements currently being processed correspond to the first time point. If they do, the program proceeds to a step 63, where it is determined whether or not the measurements for all of the satellites 13 have been processed for the currently-indexed site. If they have not been, the program loops back to the step 57, where it indexes to the next succeeding satellite. If, on the other hand, the measurements for all of the satellites have been processed, the program advances to a step 65, where it is determined whether or not the measurements for all of the sites have processed. If they have not, the program loops back to the step 55, where it indexes to the next succeeding site. If, on the other hand, the measurements for all of the sites have been processed, the program loops back to the step 49, where it indexes to the next succeeding (i.e., the second) time point.

With reference again to step 61, if it is determined that the phase measurements currently being processed are for the second and subsequent time points, the processor 31, at step 67, computes the differences since the previous time points of the phase measurements, computed ranges, and derivatives, for the satellite/receiver site currently being processed. These differences are used to form the error term and measurement equation.

In a following step 69, a triangular Householder algorithm is used to incorporate the measurement equation into the SRIF matrix. This is a conventional algorithm that is described in detail in a book by Gerald J. Bierman, entitled "Factorization Method for Discrete Sequential Estimation", Academic Press, 1977. The algorithm Bierman describes is preferably modified to permit operation on a single measurement equation at a time, rather than all simultaneously.

After the SRIF matrix has been incorporated with the measurement equation in step 69, the program advances to step 71, where it is determined whether or not the measured phase signals for all of the satellites 13 (for the current site 11 or 19 and current time point) have been processed. If not, a return is made to the step 57, where the program indexes to the next succeeding satellite. If, on the other hand, the measured phase signals for all of the satellites have been processed, the program advances to a step 73, where it is determined whether or not the signals corresponding to all of the receiver sites (for the current time point) have been processed. If not, a return is made to step 55, where the program indexes to the next succeeding site.

If, on the other hand, it is determined at step 73 that the signals corresponding to all of the receiver sites have been processed, the SRIF matrix is solved at step 75, to determine the phase errors of the various satellite and receiver clocks. The measured phase signals for the current time point are then all corrected to reflect these clock phase errors.

Thereafter, at step 77, the program determines whether or not the measured phase signals for all of the successive time points have been processed. If not, a return is made to step 49, where the program indexes to the next succeeding time point.

If, on the other hand, it is determined at step 77 that the measured phase signals for all of the successive time points have been processed, the program advances to a step 79, where the SRIF matrix is solved to determine the appropriate corrections to the site coordinates. These corrections are then made to the earlier best

estimate of these coordinates, and the first stage of the procedure has been completed. The resulting corrected position coordinates for each unknown site, which, in the preferred embodiment, is merely the single site 11, in fact corresponds to the particular coordinates that represent the least mean square error in the plurality of error signals computed for the various measurements. These coordinates represent the particular location that is the best (i.e., least mean square error) estimate of the intersection between the various hyperboloids defined by the range difference equations.

The corrected position coordinates for the unknown site 11 provided by the first stage 33 of the procedure are sufficiently accurate for many practical applications. Accuracy to within about 5-10 cm can be expected from data accumulated over an approximately 30 minute span. One factor contributing to the limited accuracy is that the successive time difference or Doppler range equations are not entirely uncorrelated with each other. This is because each successive difference measurement has, as one of its terms, the range equation for the same satellite, receiver and time point. The correlation is -0.5. The corrections to the position coordinates determined by solving the SRIF matrix could be improved if this correlation were eliminated. This is what is accomplished in the second stage 35 of the procedure.

As previously mentioned, the second stage 35, which yields the Doppler pseudorange solution, is very much similar to the first stage 33, which yields the hyperbolic solution. With reference to Figures 4A and 4B, it will be observed that the second stage differs from the first stage in only two minor, but significant, respects. First, an extra step 81 is included immediately after the step 45 of constraining the coordinates of the reference site. In particular, this extra step clears the correlation coefficient for each satellite/site pair. This is done so that the successive difference measurements can be appropriately adjusted to make them substantially uncorrelated with each other.

The second difference between the second stage 35 and the first stage 33 is the inclusion of two additional steps 83 and 85 immediately after the formation at step 67 of the error term and measurement equation. In particular, step 83 incorporates the clock phase noise portion of the current measurement into the SRIF matrix. Step 85 then whitens the measurement by computing the suitable measurement weighting factor from the correlation coefficient and adjusting the measurement by combining it with the previous measurement multiplied by the correlation coefficient. The whitening procedure is described in the Bierman reference identified above. The measurement is also scaled by the weighting factor. The adjusted and scaled measurement is saved for use at the next time point. After step 85, stage two 35 of the procedure continues with step 69 and subsequent steps, in the same manner as was described above with respect to stage one 33.

Solving the SRIF matrix at step 79 of stage two 35 provides corrections to the position coordinates of the unknown site 11 to make the coordinate estimate even more accurate than after stage one 33. Again, this increased accuracy results from taking into account the -0.5 correlation between the successive signal differences for each satellite/receiver link 21.

Although the corrected site coordinates resulting from the data processor's implementation of stage two 35 of the procedure are sufficiently accurate for many practical applications, the accuracy of these coordinates can be enhanced even further. This enhancement can be achieved by taking into account the whole cycle bias in each of the successive measured phase signals for all of the satellite/receiver links 21. It will be recalled that these biases were automatically cancelled out in both stage one 33 and stage two 35 by subtracting the error signals for successive time points for each link. Although the biases were cancelled out, this particular technique for doing so led to minor inaccuracies in the resulting coordinate corrections. Stage three 37 of the procedure specifically solves for the bias in each link.

With reference again to Figures 4A and 4B, it will be observed that stage three 37 of the procedure is very much similar to stages one and two, described above. These differences are described below.

First, stage three 37 includes an additional step 87 that immediately follows the stage two step 81 of clearing the correlation coefficient for each satellite/receiver pair. In particular, step 87 provides an additional indexing through the plurality of satellites. The first time the step is implemented, the program indexes to the first satellite. Thereafter, when looping back to this step, the program indexes to the next succeeding satellite. Following step 87, the program continues with steps 49-61, as described above with respect to stage one 33.

In a further difference between the third stage 37 and the earlier-described second stage 35, additional steps 89 and 91 are included following a no answer in step 61, i.e, a determination that the processor 31 is not currently processing signals for the first time point. At step 89, it is determined whether or not the satellite number in the extra loop (selected in step 87) is less than the satellite number selected in the main loop (in step 57). If it is, a return is made to step 49, where an index is made to the next time point. On the other hand, if it is determined that the extra loop is not less than the first loop, the program proceeds to step 91, where the error term is computed by keeping only the fractional portion of the difference between the measured value signal and the computed range. The measurement equation is then formed and the correlation coefficient set to -0.707. Thereafter, the program proceeds to steps 83 and 85, which is the same as in the second stage 35

of the procedure.

The program then continues in the same fashion as in the second stage 35, resulting ultimately in the solving of the SRIF matrix at step 79. In this third stage 37, however, this last step 79 is followed by a step 93, in which it is determined whether or not the extra loop through the plurality of satellites 31 has been completed. If not, the program loops back to the step 87, in which the satellite number in the extra loop is indexed by one.

When it is determined at step 93 that all of the satellite numbers have been indexed through in this extra satellite loop, the entire procedure is completed. The last corrections made to the position coordinates of the unknown site are, at this time, in their most accurate state.

The third stage 37 or resolved lane solution is thus divided into as many sub-solutions as there are satellites 31. The result of each sub-solution is an improved solution that has a higher probability of correctly resolving the whole cycle ambiguity of the next satellite to be incorporated into the solution. The final solution is attained when all of the satellites have been incorporated into the solution and the whole cycle ambiguity values resolved.

Attached as an Appendix is a program listing, written in Fortran, of one suitable computer program useful in implementing the present invention.

In an alternative embodiment of the invention, the SRIF matrix is replaced by a $A^TA$ matrix, where A is a standard matrix comprising the coefficients of the various error equations. This embodiment is less desirable, however, because it requires a relatively complicated Gauss elimination procedure to eliminate its dependence on prior clock phase noise parameters.

It should be appreciated from the foregoing description that the present invention provides a significantly improved technique for determining the position coordinates of an unknown site using signals broadcast from a plurality of orbiting satellites and using the known position coordinates of a predetermined reference site. The technique improves upon prior techniques by expressly solving for the phase noise in the internal clocks of the satellites and receivers. The procedure can be broken down into three distinct stages, each differing in only a small, but significant, way from the preceding stage. Each successive stage yields a slightly more accurate estimation of the unknown site's position coordinates.

Although the invention has been described in detail with reference to the presently preferred embodiment, those of ordinary skill in the art will appreciate that various modifications can be made without departing from the invention. Accordingly, the invention is defined only by the following claims.

## Claims

1. A method for determining the position coordinates of a first receiver (15) using signals broadcast from a plurality of orbiting satellites (13), wherein second receiver (17) is located at a reference location (19) having known position coordinates, and wherein the first and second receivers each receive the plurality of broadcast signals and detect the carrier phase of each signal relative to an internal clock, the method comprising steps of:

measuring the phase of the carrier signal received by each of the first and second receivers from each satellite, to produce a plurality of carrier phase measurements;

calculating the expected phase of the carrier signal received by each of the first and second receivers from each satellite, based on the satellite's orbit and an estimate of the receiver's position, to produce a plurality of carrier phase estimates;

and characterised by

repeating the steps of measuring and calculating at regular time intervals, to produce a plurality of carrier phase measurements and a plurality of carrier phase estimates at each of a succession of time points;

determining the difference between the changes in carrier phase measurements and the changes in carrier phase estimates over successive time points for each satellite/receiver pair, to produce a plurality of error values for each time point;

defining each of the plurality of error values for each time point to be equal to a predetermined function of the signal's sensitivity to small changes in the position coordinates of the corresponding receiver and in the clocks of the corresponding receiver and satellite;

forming and updating at each time point a predetermined matrix (39,41) based on the plurality of error equations for each time point;

the step of forming and updating including a step of eliminating dependence on previous values of the receiver and satellite clocks; and

solving the matrix to determine the particular position coordinates for the first receiver that minimize the mean square value of the plurality of error values.

2. A method as defined in claim 1, wherein:
the step of forming includes a step of forming a square root information filter matrix using a triangular Householder algorithm;
the matrix entries indicating sensitivity to the receiver and satellite clocks are located in a predetermined section of the matrix; and
the step of updating includes a preliminary step of zeroing the predetermined section of the matrix.

3. A method as defined in claim 1, wherein the step of forming includes a step of modifying the successive sets of error equations to make the sets substantially uncorrelated with each other.

4. A method as defined in claim 3, wherein the step of modifying includes a step of whitening the successive sets of error equations.

5. A method as defined in claim 1 further including steps following the step of solving, of:
modifying the plurality of error equations to make the successive equations for each satellite/receiver pair substantially uncorrelated with each other, thereby producing a plurality of modified error equations for each time point;
forming and updating the predetermined matrix based on the plurality of modified error equations for each time point and;
solving the matrix to determine the particular position coordinates for the first receiver that minimize the mean square value of the plurality of error values.

6. A method as defined in claim 5, wherein the step of modifying includes a step of whitening the successive sets of error equations.

7. A method as defined in claim 5, and further including steps, following the second step of solving, of:
resolving any ambiguity in the integral number of carrier cycles between each satellite and receiver pair; and
determining the particular position coordinates for the first receiver that minimize the mean square value of the plurality of error values, taking into account the integral number of carrier cycles determined, in the step of resolving, to be between each satellite and receiver pair.

8. A method as defined in claim 4, wherein the matrix used in the step of forming remains the same size following each updating.

9. A method as defined in claim 1, wherein the matrix used in the step of forming remains the same size following each updating.

10. Apparatus for determining the position coordinates of a first predetermined site (11) using signals broadcast from a plurality of orbiting satellite (13), the apparatus comprising:
a first receiver (15) located at the first site;
a second receiver (17) located at a second, reference site (19) having known position coordinates;
wherein the first and second receivers both have internal clocks and are adapted to receive the signals broadcast from the plurality of satellites and measure the carrier phase of each signal relative to their respective internal clocks, to produce a plurality of carrier phase measurements for each of a succession of time points;
means (31) for calculating the expected phase of each carrier signal received by the first and second receivers from each satellite, based on the satellite's orbit and an estimate of the receiver's position, to produce a plurality of carrier phase estimates for each of the succession of time points; characterised by
means (67) for determining changes in the carrier phase measurements and changes in the carrier phase estimates over successive time points, and for determining the differences between corresponding pairs of such measurements and estimates for each satellite/receiver pair and for each time point, to produce a plurality of error values for each time point;
matrix means (39,41) for forming a predetermined matrix that defines each of plurality of error values to be equal to a predetermined function of its own sensitivity to small changes in the position coordinates of the corresponding site and in the internal clocks of the corresponding receiver and satellite;
wherein the matrix means includes means for updating the matrix to reflect the plurality of error equations for each time point, the updating means including means for eliminating dependence on previous values of the receiver and satellite clocks; and
means for solving the matrix to determine the particular position coordinates for the first site that minimize the mean square value of the plurality of error values.

11. Apparatus as defined in claim 10, wherein:
the predetermined matrix formed by the matrix means is a square root information filter matrix;
the matrix means includes means implementing a triangular Householder algorithm to incorporate the successive error equations into the matrix;
the matrix entries indicting sensitivity to the receiver and satellite clocks are located in a predetermined section of the matrix; and
the matrix means further includes means for zeroing the predetermined section of the matrix.

12. Apparatus defined in claim 10, wherein the matrix means further includes means (85) for modifying the successive sets of error equations to make the sets substantially uncorrelated with each other.

13. Apparatus as defined in claim 12, wherein the means for modifying includes means (85) for whitening the successive sets of error equations.

14. Apparatus as defined in claim 10, and further including;
means (85) for modifying the plurality of error equations to make the successive equations for each satellite-/receiver pair substantially uncorrelated with each other; thereby producing a plurality of modified error equations for each time point;
means (35), operable after the first means for solving, for forming and updating a second predetermined matrix bases on the plurality of modified error equations for each time point; and
means (75,79) for solving the second matrix to determine the particular position coordinates for the first receiver that minimize the mean square value of the plurality of error values.

15. Apparatus as defined in claim 14, wherein the means for modifying includes means (85) for whitening the successive sets of error equations.

16. Apparatus as defined in claim 14, and further including:
means (37), operable after the second means for solving, for resolving any ambiguity in the integral number of carrier cycles between each satellite and receiver pair; and
means (75,74) for determining the particular position coordinates for the first receiver that minimize the mean square value of the plurality of error values, taking into account the integral number of carrier cycles, determined by the means for resolving, to be between each satellite and receiver pair.

17. Apparatus as defined in claim 14, wherein the first and second predetermined matrices remain the same size following each updating.

18. Apparatus as defined in claim 10, wherein the predetermined matrix remains the same size following each updating.

## Patentansprüche

1. Verfahren zur Bestimmung der Positionskoordinaten eines ersten Empfängers (15) unter Verwendung von einer Anzahl umlaufender Satelliten (13) herrührender Signale, wobei ein zweiter Empfänger (17) sich an einer Bezugsstelle (19) mit bekannten Positionskoordinaten befindet, und wobei der erste und zweite Empfänger je eine Anzahl Radiosignale empfangen und die Trägerphase jedes Signals in bezug auf ein inneres Taktimpulssignal detektieren, wobei dieses Verfahren die nachfolgenden Verfahrensschritte aufweist:
das Messen der Phase des im ersten sowie im zweiten Empfänger von jedem Satelliten empfangenen Signals zum Durchführen einer Anzahl Trägerphasenmessungen;
das Berechnen der erwarteten Phase des im ersten sowie im zweiten Empfänger empfangenen, von jedem Satelliten herrührenden Trägersignals, basiert auf der Umlaufbahn und auf einer Schätzung der Lage des Empfängers zum Erhalten einer Anzahl Trägerphasenschätzungen;
und gekennzeichnet durch
die Wiederholung der Meß- und Berechnungsschritte zu regelmäßigen Zeitintervalen zum Durchführen einer Anzahl Trägerphasenmessungen und einer Anzahl Trägerphasenschätzungen bei jedem einer Folge von Zeitpunkten;
die Ermittlung der Differenz zwischen den Anderungen in Trägerphasenmessungen und den Anderungen in Trägerphasenschätzungen über aufeinanderfolgende Zeitpunkte für jedes Satellit/Empfänger-Paar zum Erhalten einer Anzahl Fehlerwerte für jeden Zeitpunkt;
die Definierung, daß jeder der Anzahl Fehlerwerte für jeden Zeitpunkt einer vorbestimmten Funktion der Empfindlichkeit des Signals für geringe Anderungen der Positionskoordinaten des übereinstimmenden Empfängers in den Taktimpulsschaltungen des betreffenden Empfängers und Satelliten entspricht;
die Bildung und Aktualisierung zu jedem Zeitpunkt einer vorbestimmten Matrix (39, 41) basiert auf der Anzahl Fehlergleichungen für jeden Zeitpunkt;
wobei die Verfahrensschritte der Bildung und Aktualisierung einen Schritt aufweisen, bei dem die Abhängigkeit von vorhergehenden Werten der Empfänger- und Satelliten-Taktimpulsschaltungen ausgeschaltet wird; und
die Auflösung der Matrix zum Ermitteln der spezifischen Positionskoordinaten für den ersten Empfänger, was den mittleren quadratischen Wert der Anzahl Fehlerwerte minimalisiert.

2. Verfahren nach Anspruch 1, wobei:
der Bildungsschritt einen Schritt aufweist zum Bilden einer Quadratwurzelinformationsfiltermatrix unter Verwendung eines Householderschen Dreieckalgorithmus;
die Matrixeingänge, welche die Empfindlichkeit für die Taktimpulsschaltungen des Empfängers und des Satelliten angeben, in einem vorbestimmten Teil der Marx liegen; und
der Aktualisierungsschritt einen Vorbereitungsschritt aufweist zur Nulleinstellung des vorbestimmten Teils der Matrix.

3. Verfahren nach Anspruch 1, wobei der Bildungsschritt einen Schritt aufweist zum Modifizieren der aufeinanderfolgenden Sätze von Fehlergleichungen um die Sätze nahezu unkorreliert zueinander zu machen.

4. Verfahren nach Anspruch 3, wobei der Modifizierungsschritt einen Schritt aufweist zum "Weißen " der aufeinanderfolgenden Sätze von Fehlergleichungen.

5. Verfahren nach Anspruch 1 das nach dem Auflösungsschritt weiterhin die folgenden Verfahrensschritte aufweist:
das Modifizieren der Anzahl Fehlergleichungen um die aufeinanderfolgenden Gleichungen für jedes Satellit/Empfänger-Paar nahezu unkorreliert zueinander zu machen, wodurch eine Anzahl modifizierter Fehlergleichungen für jeden Zeitpunkt erzeugt werden;
das Bilden und Aktualisieren der vorbestimmten Matrix basiert auf der Anzahl modifizierter Fehlergleichungen für jeden Zeitpunkt; und
das Auflösen der Matrix zum Ermitteln der spezifischen Positionskoordinaten für den ersten Empfänger, was den mittleren quadratischen Wert der Anzahl Fehlerwerte minimalisiert.

6. Verfahren nach Anspruch 5, wobei der Modifizierungsschritt einen Schritt aufweist zum "Weißen" der aufeinanderfolgenden Sätze von Fehlergleichungen.

7. Verfahren nach Anspruch 5, das nach dem zweiten Verfahrensschritt der Auflösung weiterhin die nachfolgenden Schritte aufweist:
das Auflösen irgendeiner Zweideutigkeit in der ganzen Anzahl Trägerzyklen zwischen jedem Satellit/Empfänger-Paar; und
das Ermitteln der spezifischen Positionskoordinaten für den ersten Empfänger, was den mittleren quadratischen Wert der Anzahl Fehlerwerte minimalisiert, wobei berücksichtigt wird, daß die in dem Auflösungsschritt ermittelte ganze Anzahl Trägerzyklen zwischen jedem Satellit/Empfänger-Paar liegt.

8. Verfahren nach Anspruch 4, wobei die in dem Bildungsschritt benutzte Matrix in jeder nachfolgenden Aktualisierung dieselbe bleibt.

9. Verfahren nach Anspruch 1, wobei die in dem Bildungsschritt benutzte Matrix in jeder nachfolgenden Aktualisierung dieselbe bleibt.

10. Gerät zur Ermittlung der Positionskoordinaten eines ersten vorbestimmten Ortes (11) unter Verwendung von Radiosignalen von einer Anzahl umlaufender Satelliten (13), wobei das Gerät die folgenden Elemente aufweist:
einen ersten Empfänger (15) an einem ersten Ort;
einen zweiten Empfänger (17) an einem zweiten, Bezugsort (19) mit bekannten Positionskoordinaten;
wobei der erste und zweite Empfänger je eine innere Taktimpulsschaltung aufweisen und dazu eingerichtet sind, die von der Anzahl Satelliten ausgestrahlten Signale zu empfangen und die Trägerphase jedes Signals in bezug auf das betreffende innere Taktimpulssignal zu messen, dies zum Erhalten einer Anzahl Trägerphasenmessungen für jeden einer Folge von Zeitpunkten;
Mittel (31) zum Berechnen der erwarteten Phase jedes im ersten und zweiten Empfänger von jedem Satelliten empfangenen Trägersignals, basiert auf der Umlaufbahn des Satelliten und auf einer Schätzung der Lage des Empfängers, zum Erhalten einer Anzahl Trägerphasenschätzungen für jeden einer Folge von Zeitpunkten; gekennzeichnet durch
Mittel (67) zur Ermittlung von Änderungen der Trägerphasenmessungen und Änderungen der Trägerphasenschätzungen über aufeinanderfolgende Zeitpunkte, und zur Ermittlung der Differenz zwischen entsprechenden Paaren derartiger Messungen und Schätzungen für jedes Satellit/Empfänger-Paar und für jeden Zeitpunkt, zum Erhalten einer Anzahl Fehlerwerte für jeden Zeitpunkt;
Matrixmittel (39, 41) zum Bilden einer vorbestimmten Matrix, die bestimmt, daß jeder der Anzahl Fehlerwerte einer vorbestimmten Funktion der eigenen Empfindlichkeit für geringe Änderungen der Positionskoordinaten des entsprechenden Ortes und der inneren Taktimpulssignale des entsprechenden Empfängers und Satelliten entspricht;
wobei die Matrixmittel Mittel aufweisen zum Aktualisieren der Matrix zum Reflektieren der Anzahl Fehlergleichungen für jeden Zeitpunkt, wobei die Aktualisierungsmittel Mittel aufweisen zum Eliminieren der Abhängigkeit der Empfänger- und Satelliten-Taktimpulse von vorhergehenden Werten; und
Mittel zum Auflösen der Matrix zur Ermittlung der spezifischen Positionskoordinaten für den ersten Ort, was den mittleren quadratischen Wert der Anzahl Fehlerwerte minimalisiert.

11. Gerät nach Anspruch 10, wobei:
die durch die Matrixmittel gebildete vorbestimmte Matrix eine Quadratwurzelinformationsfiltermatrix ist;
die Matrixmittel Mittel aufweisen, die einen Householderschen Dreieckalgorithmus enthalten zum Einführen der

aufeinanderfolgenden Fehlergleichungen in die Matrix;
die Matrixeingänge, welche die Empfindlichkeit für die Empfänger- und Satellitentaktimpulse angeben, in einem vorbestimmten Teil der Matrix liegen; und die Matrixmittel weiterhin Mittel enthalten zur Nullstellung des vorbestimmten Teils der Matrix.

12. Gerät nach Anspruch 10, wobei die Matrixmittel weiterhin Mittel (85) enthalten zum Modifizieren der aufeinanderfolgenden Sätze von Fehlergleichungen um die Sätze nahezu ohne Korrelation zueinander zu machen.

13. Gerät nach Anspruch 12, wobei die Mittel zum Modifizieren Mittel (95) aufweisen zum Weißen der aufeinanderfolgenden Sätze von Fehlergleichungen.

14. Gerät nach Anspruch 10, das weiterhin die folgenden Elemente aufweist:
Mittel (95) zum Modifizieren der Anzahl Fehlergleichungen um die aufeinanderfolgenden Gleichungen für jedes Satellit/Empfängerpaar nahezu ohne Korrelation zueinander zu machen; wodurch eine Anzahl modifizierter Fehlergleichungen für jeden Zeitpunkt erzeugt werden;
Mittel (35), aktiv nach den ersten Auflösungsmitteln, zum Bilden und Aktualisieren einer zweiten vorbestimmten Matrix auf Basis der Anzahl modifizierter Fehlergleichungen für jeden Zeitpunkt; und
Mittel (15, 19) zum Auflösen der zweiten Matrix zum Bestimmen der spezifischen Positionskoordinaten für den ersten Empfänger, was den mittleren quadratischen Wert der Anzahl Fehlerwerte minimalisiert.

15. Gerät nach Anspruch 14, wobei die Mittel zum Modifizieren Mittel (85) aufweisen zum Weißen der aufeinanderfolgenden Sätze von Fehlergleichungen.

16. Gerät nach Anspruch 14, das weiterhin die folgenden Elemente aufweist:
Mittel (37) aktiv nach den zweiten Auflösungsmitteln zum Auflösen jeder Zweideutigkeit der ganzen Anzahl Trägerzyklen zwischen jedem Satellit/Empfängerpaar; und
Mittel (75, 74) zum Bestimmen der spezifischen Positionskoordinaten für den ersten Empfänger, was den mittleren quadratischen Wert der Anzahl Fehlerwerte minimalisiert, wobei berücksichtigt wird, daß die in dem Auflösungsschritt ermittelte ganze Anzahl Trägerzyklen zwischen jedem Satellit/Empfängerpaar liegt.

17. Gerät nach Anspruch 14, wobei die erste und zweite vorbestimmte Matrix nach jeder Aktualisierung jeweils derselben Größe bleibt.

18. Gerät nach Anspruch 10, wobei die vorbestimmte Matrix nach jeder Aktualisierung derselben Größe bleibt.

## Revendications

1. Procédé pour déterminer les coordonnées de position d'un premier récepteur (15) au moyen de signaux diffusés par plusieurs satellites (13) évoluant sur orbite, dans lequel un second récepteur (17) est installé en un endroit de référence (19) de coordonnées de position connues, et dans lequel le premier et le second récepteur reçoivent chacun les divers signaux diffusés et détectent la phase de porteuse de chaque signal par rapport à une horloge interne, le procédé comprenant les opérations consistant à :
mesurer la phase du signal porteur reçu par chacun des premier et second récepteurs à partir de chaque satellite, afin de produire une pluralité de mesures de phases de porteuses;
calculer la phase escomptée du signal porteur reçu par chacun des premier et second récepteurs à partir de chaque satellite, sur base de l'orbite du satellite et d'une estimation de la position du récepteur, en vue de produire une pluralité d'estimations de phases de porteuses;
et caractérisé en ce
qu'on répète les opérations de mesure et de calcul à des intervalles de temps réguliers, en vue de produire une pluralité de mesures de phases de porteuses et une pluralité d'estimations de phases de porteuses à chaque point temporel d'une succession de points temporels;
on détermine la différence entre les variations des mesures de phases de porteuses et les variations des estimations de phases de porteuses sur des points temporels successifs pour chaque paire satellite/récepteur, en vue de produire une pluralité de valeurs d'erreurs pour chaque point temporel;
on définit chaque valeur d'erreur de la pluralité de valeurs d'erreurs pour chaque point temporel comme étant égale à une fonction prédéterminée de la sensibilité du signal à de faibles variations des coordonnées de position du récepteur correspondant et des horloges du récepteur et du satellite correspondants;
on forme et on met à jour, à chaque point temporel, une matrice prédéterminée (39, 41) basée sur les diverses équations d'erreurs pour chaque point temporel;
l'opération de formation et de mise à jour comprenant une opération d'élimination de la dépendance à l'égard de valeurs précédentes des horloges de récepteurs et de satellites, et
on résout la matrice pour déterminer les coordonnées de position particulières pour le premier récepteur qui

réduisent au minimum la valeur quadratique moyenne des diverses valeurs d'erreurs.

2. Procédé suivant la revendication 1, dans lequel :

l'opération de formation comprend une opération de formation d'une matrice de filtre d'information de racine carrée utilisant un algorithme Householder triangulaire;

les entrées de la matrice indiquant la sensibilité à l'égard des horloges de récepteurs et de satellites sont installées dans une section prédéterminée de la matrice, et

l'opération de mise à jour comprend une opération préliminaire de mise à zéro de la section prédéterminée de la matrice.

3. Procédé suivant la revendication 1, dans lequel l'opération de formation comprend une opération de modification des jeux successifs d'équations d'erreurs de manière à rendre les jeux en substance exempts de corrélation mutuelle.

4. Procédé suivant la revendication 3, dans lequel l'opération de modification comprend une opération de blanchissage des jeux successifs d'équations d'erreurs.

5. Procédé suivant la revendication 1, comprenant, en outre, des opérations qui suivent l'opération de résolution et qui consistent à :

modifier la pluralité d'équations d'erreurs pour rendre les équations successives pour chaque paire satellite/récepteur en substance exemptes de corrélation mutuelle, de manière à produire une pluralité d'équations d'erreurs modifiées pour chaque point temporel;

former et mettre à jour la matrice prédéterminée basée sur la pluralité d'équations d'erreurs modifiées pour chaque point temporel, et

résoudre la matrice pour déterminer les coordonnées de position particulières pour le premier récepteur qui réduisent au minimum la valeur quadratique moyenne de la pluralité de valeurs d'erreurs.

6. Procédé suivant la revendication 5, dans lequel l'opération de modification comprend une opération de blanchissage de jeux successifs d'équations d'erreurs.

7. Procédé suivant la revendication 5, comprenant, en outre, des opérations qui suivent la seconde opération de résolution et qui consistent à :

résoudre toute ambiguïté dans le nombre entier de cycles de porteuse entre le satellite et le récepteur de chaque paire, et

déterminer les coordonnées de position particulières pour le premier récepteur qui réduisent au minimum la valeur quadratique moyenne de la pluralité de valeurs d'erreurs, en tenant compte du nombre entier de cycles de porteuse déterminé, dans l'opération de résolution, comme se trouvant entre le satellite et le récepteur de chaque paire.

8. Procédé suivant la revendication 4, dans lequel la matrice utilisée dans l'opération de formation conserve la même dimension après chaque mise à jour.

9. Procédé suivant la revendication 1, dans lequel la matrice utilisée dans l'opération de formation conserve la même dimension après chaque mise à jour.

10. Appareil pour déterminer les coordonnées de position d'un premier site prédéterminé (11) à l'aide de signaux diffusés par une pluralité de satellites (13) évoluant sur orbite, l'appareil comprenant :

un premier récepteur (15) installé au premier site;

un second récepteur (17) installé en un second site de référence (19) dont les coordonnées de position sont connues;

dans lequel le premier et le second récepteur comprennent tous deux des horloges internes et sont à même de recevoir les signaux diffusés par la pluralité de satellites et de mesurer la phase de porteuse de chaque signal par rapport à leurs horloges internes respectives, en vue de produire une pluralité de mesures de phases de porteuses pour chaque point temporel d'une succession de points temporels;

des moyens (31) pour calculer la phase escomptée de chaque signal porteur reçu par le premier et le second récepteur à partir de chaque satellite, sur base de l'orbite du satellite et d'une estimation de la position du récepteur, en vue de produire une pluralité d'estimations de phases de porteuses pour chaque point temporel de la succession de points temporels;

caractérisé par :

un moyen (67) pour déterminer des variations des mesures de phases de porteuses et des variations des estimations de phases de porteuses sur des points temporels successifs et pour déterminer les différences entre les paires correspondantes de ces mesures et estimations pour chaque paire satellite/récepteur et pour chaque point temporel, en vue de produire une pluralité de valeurs d'erreurs pour chaque point temporel;

un moyen matriciel (39, 41) pour former une matrice prédéterminée qui définit chaque valeur d'erreur d'une pluralité de valeurs d'erreurs pour qu'elle soit égale à une fonction prédéterminée de sa propre sensibilité à de faibles variations dans les coordonnées de position du site correspondant et dans les horloges internes du récepteur et du satellite correspondants;

dans lequel le moyen matriciel comprend un moyen pour mettre à jour la matrice en vue de refléter la pluralité d'équations d'erreurs pour chaque point temporel, le moyen de mise à jour comprenant un moyen pour éliminer la dépendance à l'égard de valeurs précédentes des horloges de récepteurs et de satellites, et
un moyen pour résoudre la matrice en vue de déterminer les coordonnées de position particulières pour le premier site qui réduisent au minimum la valeur quadratique moyenne de la pluralité de valeurs d'erreurs.

11. Appareil suivant la revendication 10, dans lequel :
la matrice prédéterminée formée par le moyen matriciel est une matrice de filtre d'information de racine carrée;
le moyen matriciel comprend un moyen implémentant un algorithme Householder triangulaire en vue d'incorporer les équations d'erreurs successives dans la matrice;
les entrées de la matrice indiquant la sensibilité à l'égard des horloges de récepteurs et de satellites sont disposées dans une section prédéterminée de la matrice, et
le moyen matriciel comprend, en outre, un moyen pour mettre à zéro la section prédéterminée de la matrice.

12. Appareil suivant la revendication 10, dans lequel le moyen matriciel comprend, en outre, un moyen (85) pour modifier les jeux d'équations d'erreurs successifs en vue de rendre ces jeux en substance exempts de corrélation mutuelle.

13. Appareil suivant la revendication 12, dans lequel le moyen de modification comprend un moyen (85) pour blanchir les jeux successifs d'équations d'erreurs.

14. Appareil suivant la revendication 10, comprenant, en outre :
un moyen (85) pour modifier la pluralité d'équations d'erreurs en vue de rendre les équations d'erreurs successives pour chaque paire satellite/récepteur en substance exemptes de corrélation mutuelle, produisant ainsi une pluralité d'équations d'erreurs modifiées pour chaque point temporel;
un moyen (35), pouvant intervenir après le premier moyen de résolution, pour former et mettre à jour une seconde matrice prédéterminée sur base de la pluralité d'équations d'erreurs modifiées pour chaque point temporel, et
un moyen (75, 79) pour résoudre la seconde matrice en vue de déterminer les coordonnées de position particulières pour le premier récepteur qui réduisent au minimum la valeur quadratique moyenne de la pluralité de valeurs d'erreurs.

15. Appareil suivant la revendication 14, dans lequel le moyen de modification comprend un moyen (85) pour blanchir les jeux successifs d'équations d'erreurs.

16. Appareil suivant la revendication 14 comprenant, en outre :
un moyen (37) pouvant intervenir après le second moyen de résolution pour résoudre toute ambiguïté dans le nombre entier de cycles de porteuse entre le satellite et le récepteur de chaque paire, et
un moyen (75, 79) pour déterminer les coordonnées de positions particulières pour le premier récepteur qui réduisent au minimum la valeur quadratique moyenne de la pluralité de valeurs d'erreurs, compte tenu du nombre entier de cycles de porteuse, déterminé par le moyen de résolution, qui doit se trouver entre le satellite et le récepteur de chaque paire.

17. Appareil suivant la revendication 14, dans lequel la première et la seconde matrice prédéterminées conservent la même dimension après chaque mise à jour.

18. Appareil suivant la revendication 10, dans la même dimension après chaque mise à jour.

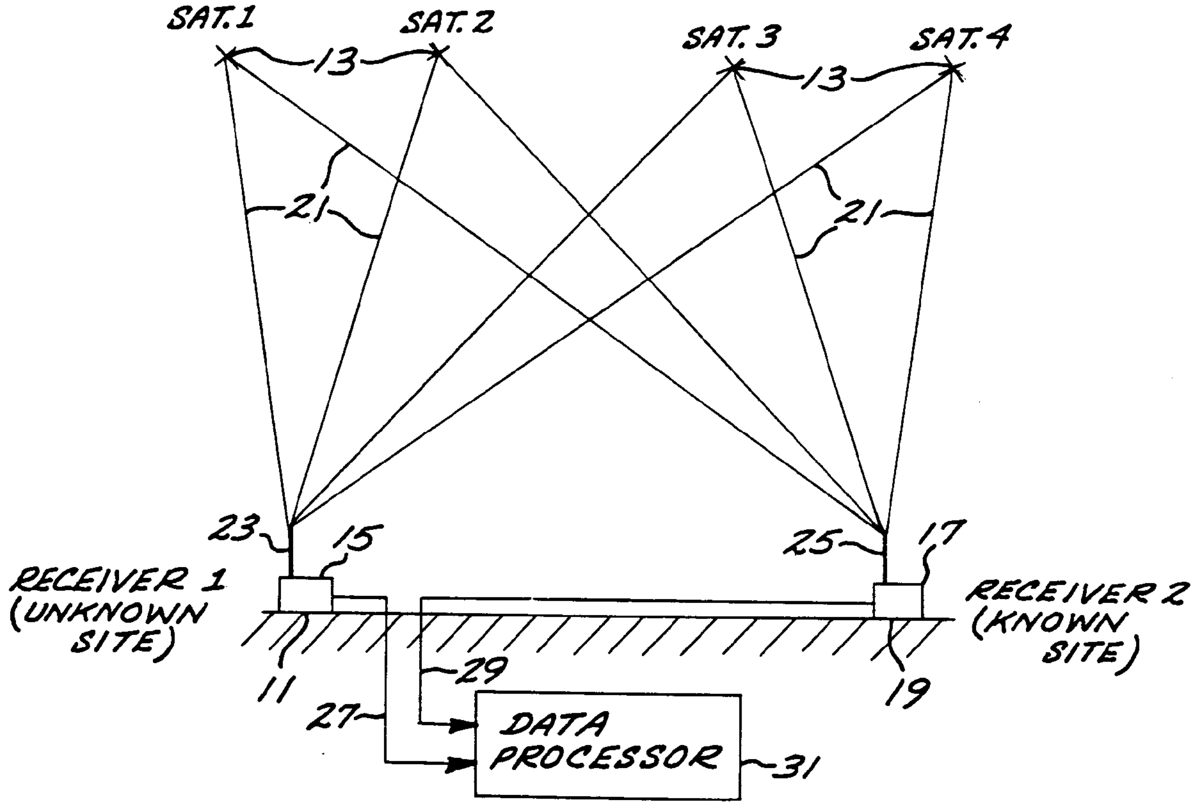
SAT. 1
SAT. 2
SAT. 3
SAT. 4
13
13
21
21
23
25
15
17
RECEIVER 1 (UNKNOWN SITE)
RECEIVER 2 (KNOWN SITE)
11
19
29
27
DATA PROCESSOR
31

FIG. 1

FIG. 3

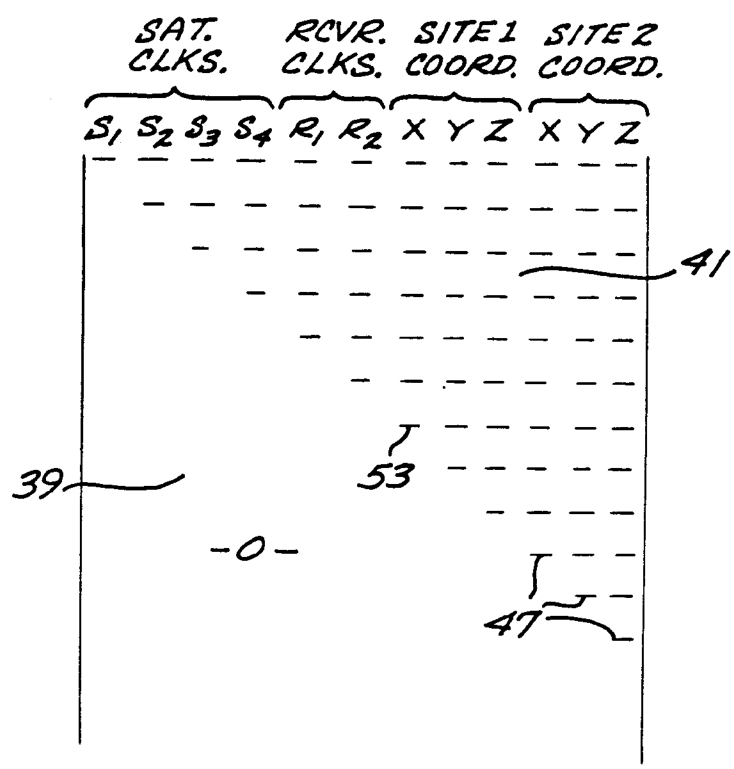
SAT. CLKS.
RCVR. CLKS.
SITE 1 COORD.
SITE 2 COORD.
S1 S2 S3 S4
R1 R2
X Y Z
X Y Z
41
53
39
-0-
47

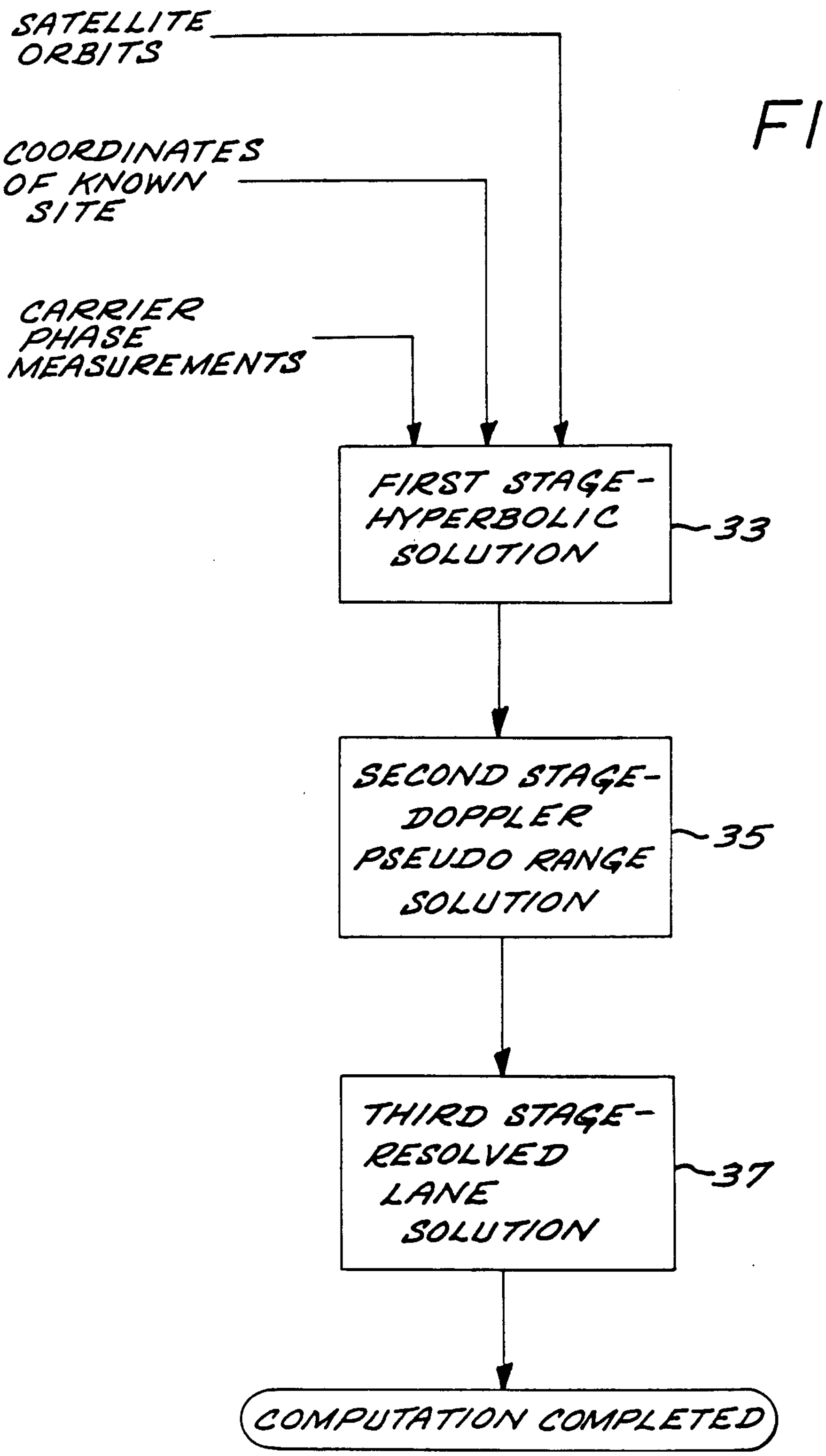
SATELLITE ORBITS
COORDINATES OF KNOWN SITE
CARRIER PHASE MEASUREMENTS
FIRST STAGE-HYPERBOLIC SOLUTION
33
SECOND STAGE-DOPPLER PSEUDO RANGE SOLUTION
35
THIRD STAGE-RESOLVED LANE SOLUTION
37
COMPUTATION COMPLETED

FIG.2

FIG. 4A

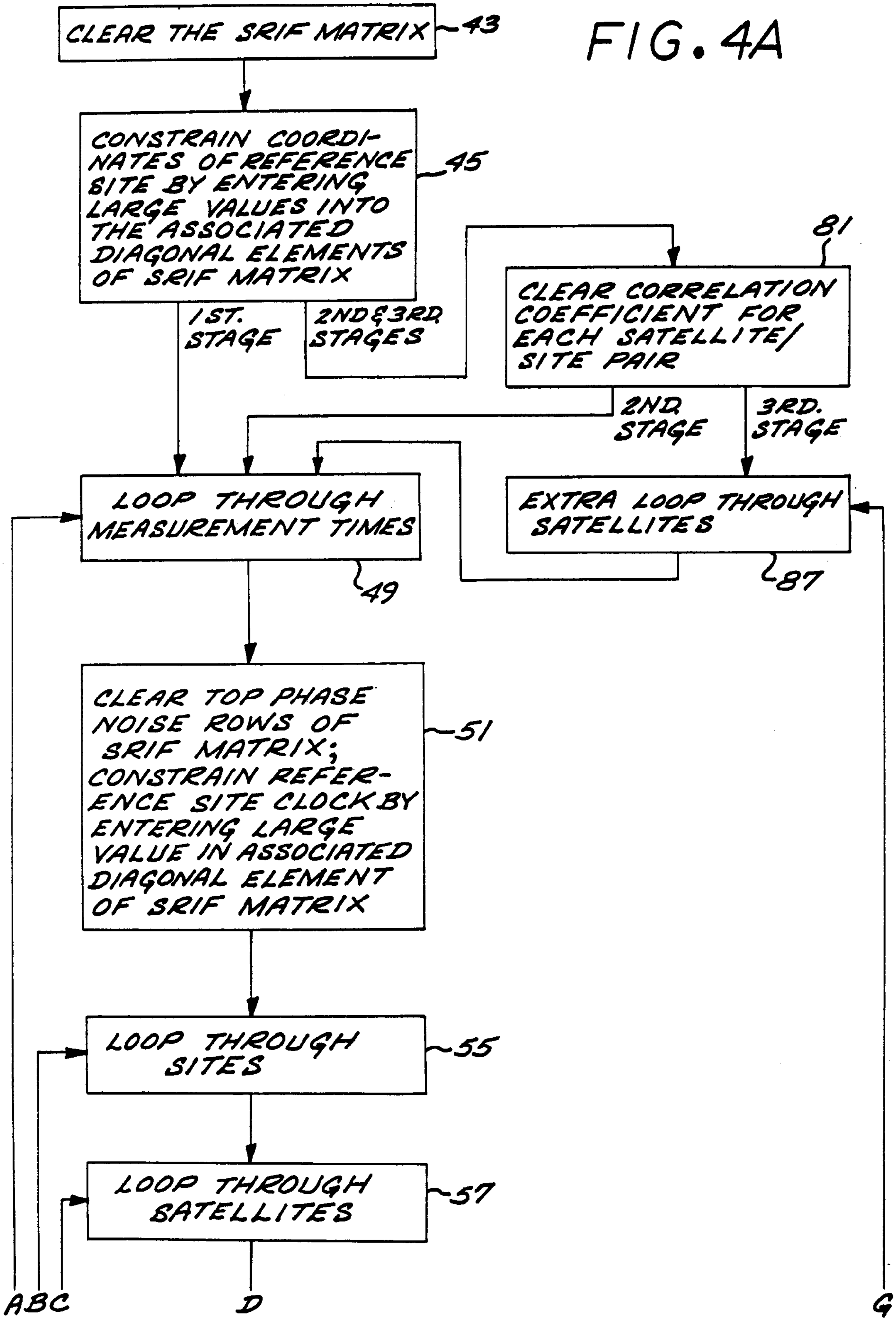
CLEAR THE SRIF MATRIX
43
CONSTRAIN COORDINATES OF REFERENCE SITE BY ENTERING LARGE VALUES INTO THE ASSOCIATED DIAGONAL ELEMENTS OF SRIF MATRIX
45
1ST. STAGE
2ND & 3RD STAGES
81
CLEAR CORRELATION COEFFICIENT FOR EACH SATELLITE/SITE PAIR
2ND STAGE
3RD. STAGE
LOOP THROUGH MEASUREMENT TIMES
49
EXTRA LOOP THROUGH SATELLITES
87
CLEAR TOP PHASE NOISE ROWS OF SRIF MATRIX; CONSTRAIN REFERENCE SITE CLOCK BY ENTERING LARGE VALUE IN ASSOCIATED DIAGONAL ELEMENT OF SRIF MATRIX
51
LOOP THROUGH SITES
55
LOOP THROUGH SATELLITES
57
A
B
C
D
G

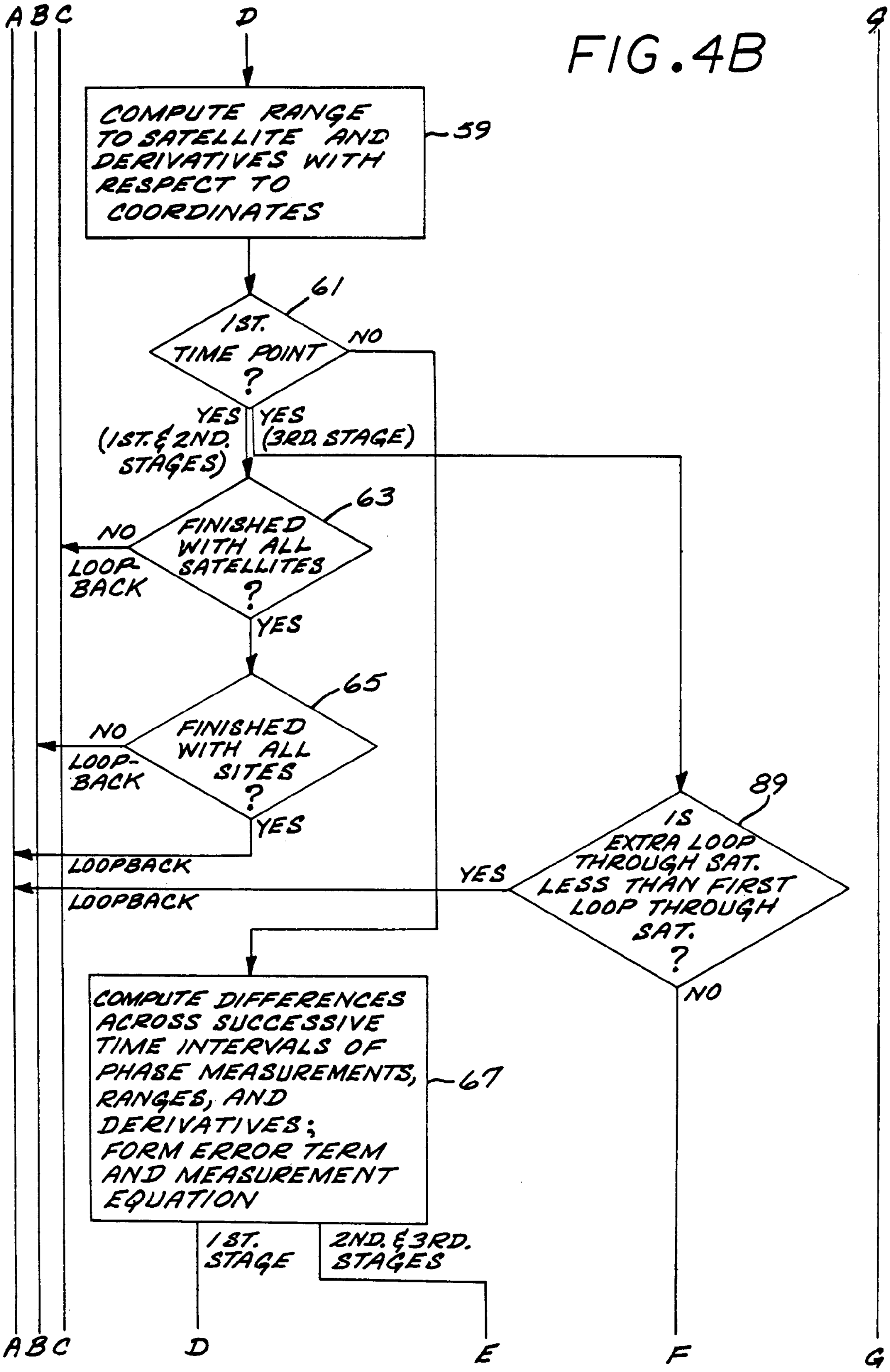
A B C
D
G
FIG.4B
COMPUTE RANGE TO SATELLITE AND DERIVATIVES WITH RESPECT TO COORDINATES
59
61
1ST. TIME POINT ?
NO
YES (1ST. & 2ND. STAGES)
YES (3RD. STAGE)
63
FINISHED WITH ALL SATELLITES ?
NO
LOOP-BACK
YES
65
FINISHED WITH ALL SITES ?
NO
LOOP-BACK
YES
LOOPBACK
89
IS EXTRA LOOP THROUGH SAT. LESS THAN FIRST LOOP THROUGH SAT. ?
YES
LOOPBACK
NO
COMPUTE DIFFERENCES ACROSS SUCCESSIVE TIME INTERVALS OF PHASE MEASUREMENTS, RANGES, AND DERIVATIVES; FORM ERROR TERM AND MEASUREMENT EQUATION
67
1ST. STAGE
2ND. & 3RD. STAGES
A B C
D
E
F
G

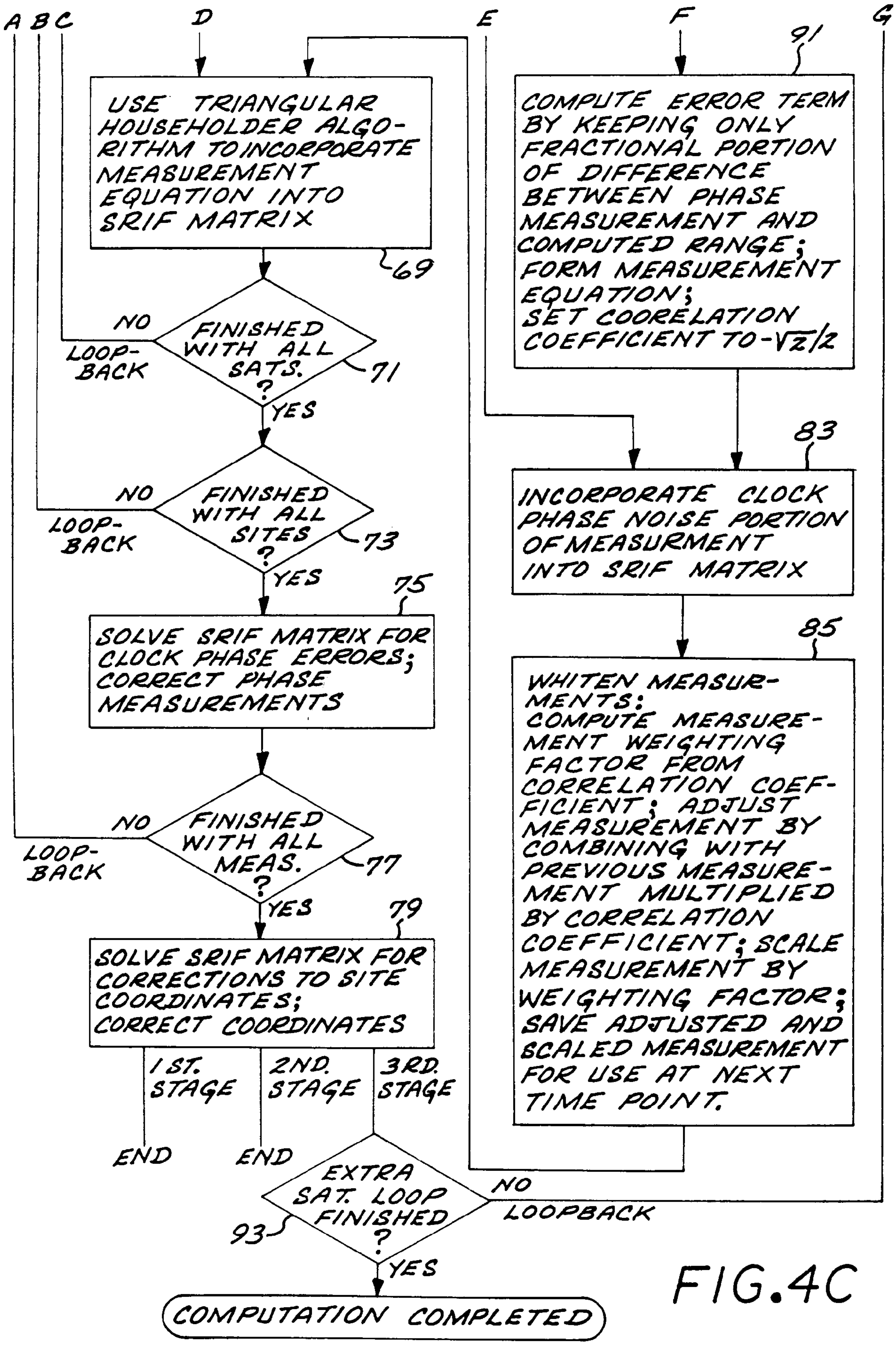
A B C
D
E
F
G
USE TRIANGULAR HOUSEHOLDER ALGORITHM TO INCORPORATE MEASUREMENT EQUATION INTO SRIF MATRIX
69
FINISHED WITH ALL SATS. ?
71
NO
LOOP-BACK
YES
FINISHED WITH ALL SITES ?
73
NO
LOOP-BACK
YES
75
SOLVE SRIF MATRIX FOR CLOCK PHASE ERRORS; CORRECT PHASE MEASUREMENTS
FINISHED WITH ALL MEAS. ?
77
NO
LOOP-BACK
YES
79
SOLVE SRIF MATRIX FOR CORRECTIONS TO SITE COORDINATES; CORRECT COORDINATES
1 ST. STAGE
2ND. STAGE
3RD. STAGE
END
END
EXTRA SAT. LOOP FINISHED ?
93
NO
LOOPBACK
YES
COMPUTATION COMPLETED
91
COMPUTE ERROR TERM BY KEEPING ONLY FRACTIONAL PORTION OF DIFFERENCE BETWEEN PHASE MEASUREMENT AND COMPUTED RANGE; FORM MEASUREMENT EQUATION; SET COORELATION COEFFICIENT TO -√2/2
83
INCORPORATE CLOCK PHASE NOISE PORTION OF MEASURMENT INTO SRIF MATRIX
85
WHITEN MEASUR-MENTS: COMPUTE MEASURE-MENT WEIGHTING FACTOR FROM CORRELATION COEF-FICIENT; ADJUST MEASUREMENT BY COMBINING WITH PREVIOUS MEASURE-MENT MULTIPLIED BY CORRELATION COEFFICIENT; SCALE MEASUREMENT BY WEIGHTING FACTOR; SAVE ADJUSTED AND SCALED MEASUREMENT FOR USE AT NEXT TIME POINT.

FIG.4C